# EUROPEAN PATENT SPECIFICATION

(11) **EP 2 832 519 B1**
(45) Date of publication and mention of the grant of the patent: **16.03.2016**
(21) Application number: 13178633.7
(22) Date of filing: 30.07.2013
(51) Int. Cl.: B29C 35/16, B29C 41/06, B29C 41/46, B29C 35/08, B29C 41/04, B29C 33/06, B29C 33/04

(54) **Mold for rotational molding and method for heating said mold**
Form zum Drehformen und Verfahren zum Erwärmen der Form
Moule pour moulage rotatif et procédé de chauffage dudit moule

(43) Date of publication of application: 04.02.2015
(73) Proprietor: Confindustria Bergamo, 24121 Bergamo (IT)
(72) Inventor: Bergamo, Lorenzo, 24027 Nembro (Bergamo) (IT); Daute, Sebastian, 58507 Lüdenscheid (DE); Fernandez, Nora, 28034 Madrid (ES); Kearns, Mark P., Belfast, BT7 1NN (GB); Vanzi, Marco, 24121 Bergamo (IT)
(74) Representative: Conti, Marco

(56) References cited:
- EP-A1- 0 505 738
- DE-A1-102011 053 867
- FR-A1- 2 190 583
- GB-A- 712 939
- GB-A- 788 063
- GB-A- 1 294 068
- JP-A- S57 157 730
- US-A- 3 734 665
- US-A- 5 837 183
- US-A1- 2011 017 749

## Description

This invention relates to a mould for rotational moulding and to a method for heating the mould.

The invention addresses the technical field of the rotational moulding of hollow thermoplastic objects (preferably containers) from basic thermoplastic material in the form of powder, granules or liquid.

As is known, the rotational moulding of hollow containers of thermoplastic material is done by heating a mixture in the form of powder, granules or liquid inside a mould.

The mould containing the powder mixture is heated and simultaneously moved (rotated) so as to melt the powder material and allow the melted material to adhere to the walls of the mould to form the hollow object required.

The mould is composed of a pair of half-shells which are coupled to define a cavity for receiving the basic material and having the shape of the object to be made.

In the technical sector concerned, moulding machines are known which have a fixed frame and a frame that is movable relative to the fixed frame which supports the mould itself. Examples of such machines are known, for example, from the following patent documents: EP1649997A1, EP2353829A1, US2010143519A1 and US2011017749A1.

In the prior art solutions, the mould is heated by a diathermic oil circulating through it or, alternatively, by electrical current circulating through a conductor in contact with the mould (thanks to the Joule effect).

One disadvantage of these technical solutions, however, is due to the timescales of moulding, which are usually very long.

A further disadvantage lies in the energy consumption of the moulding machines, which is particularly high and is reflected in the production cost of the object made.

Yet another disadvantage is due to the need to cool the mould, which requires the provision of a dedicated cooling circuit.

Known from patent document US2008/0230957 is a stationary mould (that is, a mould suitable for traditional, non-rotational moulding) heated by electromagnetic induction. This solution, too, is disadvantageous in terms of heating efficiency (and cooling, which is a problem closely connected to that of heating). Other examples of stationary moulds are described in the following patent documents: DE102011053867A1, US5837183A and EP0505738A1. Other examples of rotary moulds are described in the following patent documents: US3734665, GB1294068, FR2190583, GB712939 and GB788063. In particular, US3734665 discloses a mould for rotational moulding according to the preamble of claim 1.

This invention has for an aim to overcome the above mentioned disadvantages by providing a mould for rotational moulding of hollow thermoplastic objects and which overcomes the above mentioned disadvantages of the prior art.

More specifically, the aim of this invention is to provide a mould for rotational moulding and a method for heating the mould which can reduce the timescale and energy consumption of moulding operations.

A further aim of this invention is to provide a rotational mould (that is, a mould for rotational moulding) and a method for heating the mould which allow the material inside the mould to be heated in a particularly effective and efficient manner.

These aims are achieved by the mould and method according to the invention, as characterized in the appended claims.

More specifically, the mould for rotational moulding of hollow objects from basic thermoplastic material in the form of powder, granules or liquid, comprises at least a first and a second half-shell of metallic material, coupled to define a cavity having the shape of the object to be moulded. According to the invention, the mould comprises at least one electrically conductive element disposed in contact with the first and/or the second half-shell to define a winding (that is, a coil). The winding is connectable (is operatively connected to) a high frequency variable electrical power source, so as to generate a magnetic field in said half-shells in order to heat them by electromagnetic induction.

Also, preferably, the coil is internally hollow (for example, it consists of a copper tube) to define a passage for a coolant fluid.

The fact that the mould is heated by electromagnetic induction allows energy saving while guaranteeing efficient heating.

The fact that the coil is in direct contact with the mould further increases the efficiency of the mould for heating purposes because the coil itself is heated and transmits heat to the mould by conduction, as well as by electromagnetic induction.

Moreover, the fact that the coil is internally hollow, so that the coolant fluid can flow through it, allows optimizing heat transfer efficiency, during both heating and cooling, in a particularly compact and simple solution. Preferably, the electrically conductive element (that is, the coil) is housed in a groove (or channel), formed on the outside surface of the mould half-shells, at a predetermined depth. This further improves the efficiency of heat exchange to and from the mould during both heating and cooling.

The method for heating a rotational mould according to the invention comprises the following steps:
- providing a rotational mould having at least a first half-shell and a second half-shell coupled to define a cavity having the shape of the object to be moulded;
- providing at least one electrically conductive element in contact with the outside of at least one of the half-shells defining a coil and arranged to generate a magnetic field at least partly surrounding the half-shells;
- introducing basic thermoplastic material, in the form of powder, granules or liquid, in the cavity;
- electrically powering the coil with a varying high-frequency electric signal so as to heat at least one of the half-shells by induction and transmit heat to the basic thermoplastic material inside the cavity in order to melt the thermoplastic material.

It should be noted that the term "electric signal" is used to mean an electric power signal supplied to the mould winding in order to heat the mould. Preferably, a cooling step is performed by causing a coolant fluid to circulate in a passage defined inside the coil.

Preferably, this step of cooling is performed at the end of (after) the step of heating (by electromagnetic induction and by conduction), to further improve heating efficiency and energy saving. In effect, this allows also the heat accumulated in the coil to be used to heat the mould.

It should be noted that according to another aspect of the invention, a simulator device is provided to optimize mould design for the purposes of mould heating.

The simulator device comprises a memory, a processor and an interface.

The memory contains the data defining a thermal model of the mould (this data comprises a plurality of model parameters, representing, for example, the constructional features of the mould which are invariable relative to the shape of the part to be moulded, as well as, preferably, the characteristics of electrically powering the mould by electromagnetic induction).

The device is configured to receive input data relating to a plurality of input parameters representing the geometry of the mould as a function of the part to be moulded.

On receiving this data, the processor sets the values of a plurality of model parameters relating to the geometry of the mould. Of these, some are optimization parameters because they contribute to defining the model but, at the same time, are a direct object of optimization performed by the device. These optimization parameters regard in particular the geometry of the coil (the geometry is a function of mould shape but is subject to a margin of variability and design choice).

The memory contains software which, when run by the processor, starts a simulation or, preferably, two or more simulations of the thermal behaviour of (that is, of the temperature distribution in) the mould.

Preferably, the device is programmed to allow setting of a plurality of model parameters such as, for example, the frequency of the supply voltage or the temperature and flow rate of the coolant.

The distribution of the temperature in the mould is useful to assess the efficiency of rotational mould heating by electromagnetic induction.

Preferably, the device is programmed to run two or more simulations in succession. The device is programmed to modify one or more model parameters, between one simulation and the next, with particular regard to the aforesaid optimization parameters, based on a preset criterion aimed at optimizing the energy yield of the mould.

Thus, the device is preferably programmed to run an iterative process comprising a plurality of temperature distribution simulations, followed by corresponding modifications to the model parameter configuration (optimization).

At the end of the simulation process, the device preferably returns a suggested geometry of the coil, calculated as a function of the geometry of the specific mould (or of the plastic part to be moulded) in order to optimize mould heating and energy yield.

Preferably, the set of optimization parameters includes one or more of the following parameters:
- length of the winding (coil);
- depth of the channel formed on the mould half-shells and housing the coil;
- power of pulse generator;
- properties of coolant fluid;
- flow rate of coolant fluid.

This and other features of the invention will become more apparent from the following description of a preferred embodiment of it, illustrated purely by way of non-limiting example in the accompanying drawings, in which:

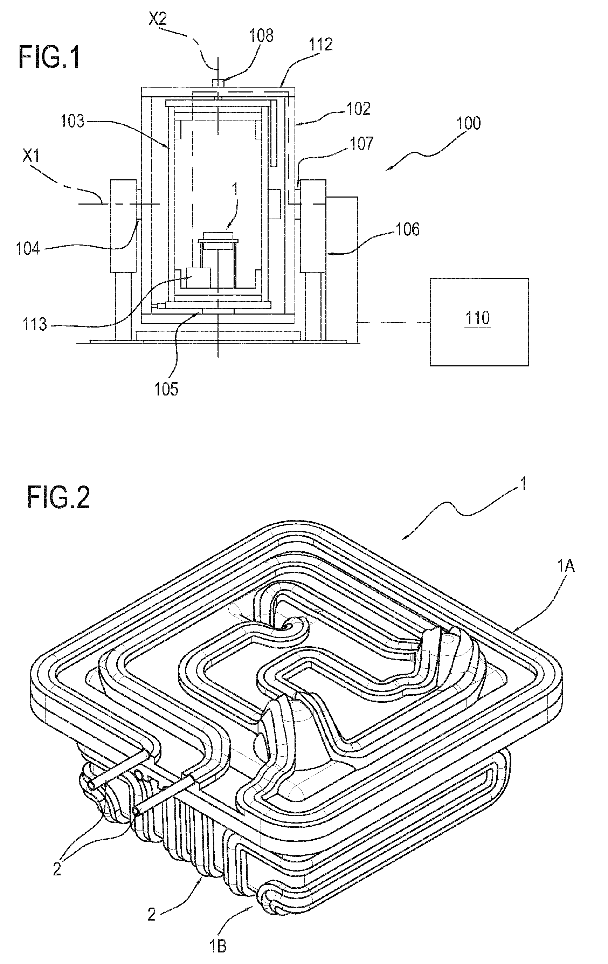

- Figure 1 is a schematic view of a preferred embodiment of the moulding machine of this invention;
- Figure 2 is a perspective view of a mould of this invention;
- Figure 3 is a sectional view of the mould of Figure 2;
- Figure 4 is a sectional view of a detail of the mould of Figure 2;
- Figure 5 is an exploded perspective view of the mould of the preceding figures.

In the accompanying drawings, the numeral 1 denotes a mould for thermoplastic materials according to this invention and the numeral 100 a moulding machine comprising the mould 1.

The mould 1 is a rotational mould.

The mould 1 is used to make hollow objects of thermoplastic material of any shape (for example, containers).

It should be noted that the mould 1 comprises at least two half-shells 1A and 1 B which are coupled to define a cavity 3 shaped to match the outer contours of the object to be made.

According to the invention, the mould 1 comprises at least one element 2 made of electrically conductive material (preferably metallic) defining an electric winding or coil.

It should be noted, therefore, that the element 2 of electrically conductive material is shaped to define a coil of any shape or size.

The element 2 of electrically conductive material (hereinafter also referred to as coil 2) is in contact, on the outside of it, with the half-shells (1A,1B) so that heat exchange is made possible, by conduction, between the half-shells (1A,1B) and the element 2.

Preferably, the electrically conductive element 2 is made of copper. Preferably, the electrically conductive element 2 extends in coil-like fashion.

Preferably, the electrically conductive element 2 defines a winding.

The half-shells (1A,1B), on the other hand, are made preferably of aluminium.

Preferably, the half-shells (1A,1B) are made of metal.

According to another aspect, the electrically conductive element 2 is a tubular element which is internally hollow to allow a coolant fluid to flow inside it.

Preferably, the mould 1 comprises a plurality of electrically conductive elements 2 disposed on the outside surfaces (side, top and bottom) of the two half-shells (1A,1B).

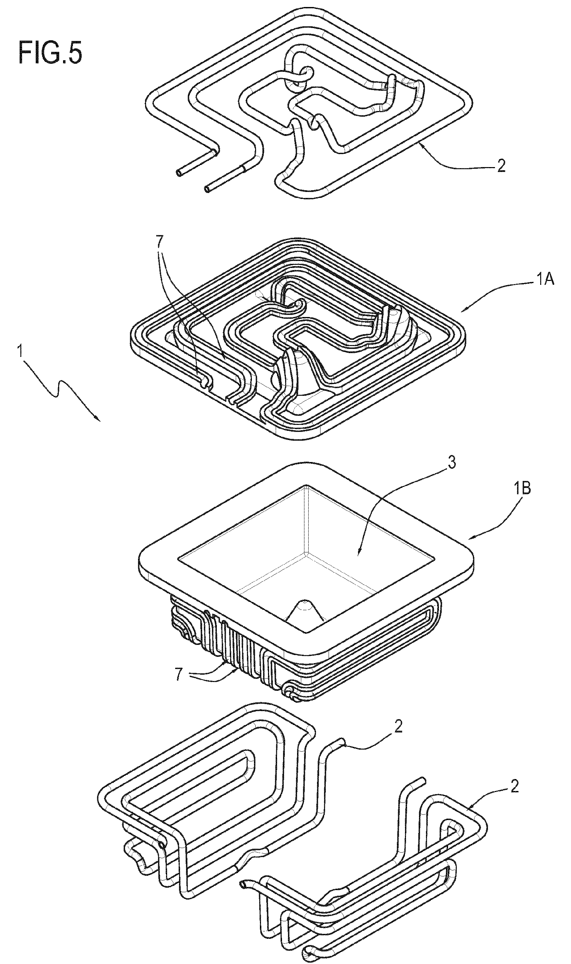

In the example illustrated, clearly visible in Figure 5, the mould 1 comprises three coils.

It should be noted, in particular, that each of the coils extends on a portion of the outside surface of the half-shells (1A,1 B) of the mould 1.

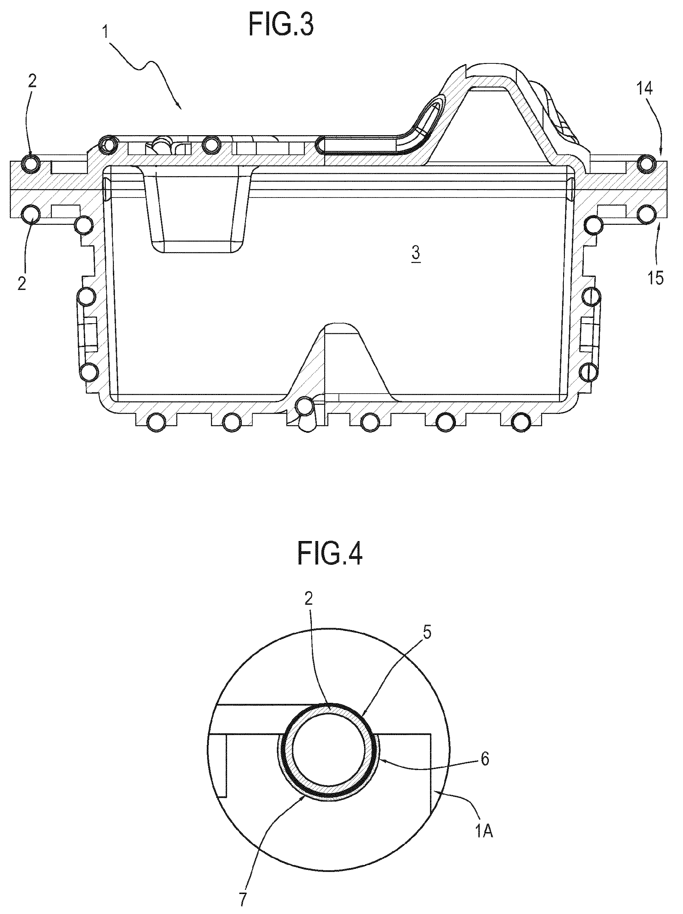

Figure 4 shows a coil in cross section.

As may be observed, the half-shells (1A,1B) preferably comprise one or more seats 7 for receiving the coils.

Preferably, each seat 7 is defined by a channel formed on the outside surface of the two half-shells (1A,1B).

The seat 7 extends in such a way that it can house the respective electrically conductive element 2 inside it.

For example, if the electrically conductive element 2 extends in coil-like fashion, the seat 7 also extends in coil-like fashion.

The channels 7 are open towards the outside of the two half-shells (1A,1B).

More specifically, the channels 7 are grooves formed on the outside surface of the two half-shells (1A,1B).

It should be noted that the coil is preferably housed partly inside the seat 7.

In the embodiment illustrated, the electrically conductive element 2 preferably has a dielectric (electrically insulating) outside layer 5 whose dielectric rigidity in radial direction is greater than that of the electrically conductive element 2.

Preferably, the dielectric layer 5 has a dielectric rigidity greater than 200Kv/mm.

Thus, the dielectric rigidity of the dielectric layer 5 is high.

Preferably, also, the thermal conductivity of the layer 5 is greater than 0.1 W/(m K).

It should be noted that the dielectric layer 5 has a high resistance to high temperatures and, more specifically, is capable of resisting temperatures greater than 150° C.

It should be noted that the dielectric layer 5 has insulating properties in electrical terms and conductive properties in thermal terms: it thus provides good electrical insulation, resistance to high temperatures and good heat transmission.

Preferably, the dielectric layer 5 is a polyamide-based film (and still more preferably, the dielectric layer 5 is a layer of Kapton ®).

The mould 1 preferably also comprises a layer 6 of thermally conductive material interposed between the dielectric layer 5 and the walls of the seat 7.

The layer 6 has the function of filling the space between the coil 2 (more specifically, in the example illustrated, between the dielectric layer 5) and the walls of the respective seat 7.

The layer 6 allows improving heat transmission by conduction between the element 2 and the half-shells (1A,1B).

At the same time, the layer 6 also increases the dielectric rigidity between the coil and the walls of the seat 7.

It should be noted that the layer 6 comprises a dielectric, thermally conductive material.

The layer 6 thus optimizes the thermal continuity between the dielectric layer 5 and the walls of the seat 7.

Preferably, the layer 6 comprises an inorganic polymer.

Still more preferably, the layer 6 comprises a silicone material.

Preferably, the layer 6 comprises a silicone paste.

Now described below is the moulding machine 100, which is equipped with the mould 1 described above.

From this description, the operation of the mould 1 may be inferred in more detail.

The machine 100 comprises a fixed frame 101.

The fixed frame 101 rests on the floor.

The machine 100 also comprises a first movable frame 102, which is movably mounted on (supported by) the fixed frame 101.

The first movable frame 102 rotates relative to the fixed frame 101.

More specifically, the first movable frame 102 is configured to rotate about a first axis X1 (preferably, substantially horizontal).

The machine 100 further comprises movement means 104 by which the first movable frame 102 is moved relative to the fixed frame 101. Preferably, the movement means 104 comprise an actuator.

The machine 100 further comprises a drive and control unit configured to control and drive the actuators of the machine itself.

The machine 100 also comprises a second movable frame 103, which is movably supported by the first movable frame 102.

It should be noted that, in practice, therefore, the second movable frame 103 is movable relative to the first movable frame 102 (and thus relative to the fixed frame 101).

More specifically, the second movable frame 103 rotates relative to the first movable frame 102 about a second axis X2 (preferably substantially vertical).

The second axis X2 is at right angles to the first axis X1.

The machine 100 further comprises movement means 105 by which the second movable frame 103 is moved relative to the first movable frame 102.

The mould is fixed to (that is, mounted on) the second movable frame 103. With reference to the first movable frame 102, it should be noted that the first movable frame 102 is connected to the fixed frame 101 by a first rotary joint 107.

With reference to the second movable frame 103, it should be noted that the second movable frame 103 is connected to the first movable frame 102 by a second rotary joint 108.

It should be noted that the first rotary joint 107 and the second rotary joint 108 are configured to allow cables to pass between the frames so that electrical signals can be carried (through the cables) from the fixed frame 101 to the second movable frame 103 (where the coil is located).

More specifically, the first rotary joint 107 and the second rotary joint 108 are equipped with rotary sliding contacts allowing signal transfer between input cables leading into the joint and output cables leading out of the joint. Preferably, the rotary joints for the passage of electrical current have gold-coated contact portions.

Preferably, the cables are intertwined (twisted pairs) so as to define a capacitance which can compensate the inductance produced between the ends of the cables.

It should be noted, therefore, that intertwining the cables allows the inductance of the cables, that is, of the power supply line, to be considerably reduced.

That means the twisted cables can also carry high-frequency power. According to the invention, the machine 100 also comprises a power supply.

Preferably, the power supply 106 comprises a signal generator 106.

Still more preferably, the power supply 106 comprises a pulse generator.

It should be noted that the generator 106 is a generator of signals at a predetermined frequency.

Preferably, the frequency is between 30 and 200 kHz.

Preferably, the generator signal is in the form of pulses.

The generator 106 is housed in a box-shaped container mounted to the fixed frame 101 of the machine.

It should also be noted that the machine 100 also comprises a capacitive module 113 electrically coupled in parallel to the coil.

The capacitive module 113 comprises one or more capacitors.

The generator 106 is coupled to the ends of the coil and of the capacitive module 113 to form, in their entirety, a resonant circuit.

It should be noted that the resonant circuit causes the coil 2 to generate an electromagnetic field at a predetermined frequency.

The generator, the capacitive module 113 and the coil 2 define in their entirety a radiofrequency transmitter circuit (which generates an electromagnetic field at the predetermined frequency at the coil).

The coil thus defines a transmission antenna configured to transmit the radiofrequency signal received from the signal generator 106.

It should be noted that the capacitive module 113 and the coil are connected to the signal generator 106 by cables (which pass through the rotary joints 107 and 108).

It should be noted, more in general, that the machine 100 is equipped with a power supply line 112 having a first end and a second end defined by the aforementioned cables.

The signal generator 106 is connected to the first end and the electrically conductive element 2 is connected to the second end.

With reference to the specific location of the aforementioned elements, attention is drawn to the following.

The pulse generator 106 is mounted to the fixed frame 101 of the machine 100.

The capacitive module 113, on the other hand, is located on the second movable frame 103.

More specifically, the capacitive module 113 is mounted to the second rotary frame 103.

It should be noted that the coil is also mounted to the second movable frame 103.

The varying electromagnetic field generated by the coil induces eddy currents (by electromagnetic induction) in the half-shells (1A,1B), thereby heating the mould.

Thus, the half-shells (1A,1B) are heated by electromagnetic induction. According to another aspect, a feedback signal is generated which is picked up at the coil.

This signal is preferably a low-power signal.

It should be noted that this feedback signal represents the instantaneous voltage at the coil and is sent to the signal generator 106.

The signal generator 106 is configured to receive the feedback signal and to regulate the signal it generates as a function of the feedback signal. More specifically, the signal generator 106 is configured to regulate the phase of the signal it generates as a function of the feedback signal. Advantageously, this aspect allows compensating possible phase displacements of the pulses between the power supply 106 and the electrically conductive element 2.

In other words, the pulse phase is controlled by a feedback system.

This advantageously allows maximizing the power transmitted by the generator 106 to the half-shells (1A,1B) by induction since the pulses released by the coil are perfectly in phase.

The transmitter circuit is driven exactly at the frequency of resonance.

The fact of providing a low-power feedback signal picked up from the coil and sent to the pulse generator 106 and regulating the pulse generator 106 based on that signal advantageously makes it possible to compensate pulse delays due, for example, to the transmission line 112 (cables), and even to cancel them completely.

Indeed, it should be noted that the power supply line 112 (on account of the very inductance defined by it) causes a displacement of the signal generated by the signal generator 106 at the ends of the coil.

Below is a brief description of how the machine 100 works, from which the operation of the invention may be inferred.

The operator loads a predetermined quantity of basic thermoplastic material in the form of powder, granules or liquid into the two half-shells (1A,1B), and more specifically into the cavity 3.

Preferably, the basic thermoplastic material may be polyethylene (LLDPE, LDPE, LHDPE, HDPE), cross-linked polyethylene, polypropylene, E.V.A., nylon, polycarbonate, PVC, etc.

Next, the signal generator 106 generates a pulsed signal of predetermined frequency (preferably, a radio frequency signal).

It should be noted this signal is transmitted to the coil, which generates a varying electromagnetic field.

This varying electromagnetic field generates, by induction, eddy currents in the half-shells (1A,1B) of the mould 1, thereby heating the basic thermoplastic material inside the cavity 3.

It should be noted that concurrently with generation of the pulsed signal of predetermined frequency, that is to say, concurrently with heating, the mould 1 is driven in rotation.

More specifically, the first movable frame 102 and the second movable frame 103 are driven in rotation about the respective axes of rotation, thereby causing the mould 1 to rotate.

During this heating step, the powder initially forms on the surface of the cavity 3 of the mould 1 a porous film to which the rest of the material adheres as it gradually becomes fluid.

A uniform layer is thus formed which becomes solid during the subsequent cooling step.

It should be noted that the heating step is followed by a cooling step.

During the cooling step, a coolant fluid (for example, water) is made to flow through the electrically conductive element 2, cooling the mould 1 and thereby solidifying the layer of thermoplastic material which has adhered to the mould walls.

Preferably, the mould is driven in rotation also during cooling.

The machine thus also comprises a cooling unit 110 configured to cause a coolant fluid (in liquid or gaseous form) to circulate in the coil 2 in such a way as to cool the mould 1.

The cooling unit 110 may comprise a cooling exchanger and a closed circuit in which the coolant fluid can circulate.

The cooling exchanger operates on the coolant fluid before it enters the coil.

Preferably, the mould is cooled concurrently with rotation of the mould 1, that is to say, during rotation of the mould 1.

Also defined is a method of heating a rotational mould for hollow objects of thermoplastic material.

The heating method comprises the following steps:
- providing a rotational mould 1 having at least a first half-shell 1A and a second half-shell 1 B coupled to define a cavity 3 having the shape of the object to be moulded;
- providing at least one electrically conductive element in contact with the outside of at least one of the half-shells (1A, 1B) defining a coil and arranged to generate a magnetic field at least partly surrounding the half-shells (1A, 1 B);
- introducing basic thermoplastic material, in the form of powder, granules or liquid, in the cavity 3;
- electrically powering the coil with a varying high-frequency electric signal so as to heat at least one of the half-shells (1A, 1B) by induction and transmit heat to the basic thermoplastic material inside the cavity 3.

According to another aspect, the step of electrically powering the coil comprises a step of driving the mould 1 in rotation.

According to another aspect, the step of driving the mould 1 in rotation comprises a step of driving the mould 1 simultaneously in rotation about a first axis X1 and a second axis X2 at right angles to each other.

According to yet another aspect, the heating method comprises at least one step of providing on the outside surface of the half-shells (1A,1B) at least one channel 7 for housing the coil.

According to another aspect, the heating method comprises, before the step of electrically powering the coil with a varying high-frequency electric signal, a step of insulating the coil with a dielectric layer 5 wrapped around the outside of the coil itself.

It should be noted that according to a yet further aspect, the electrically conductive element 2 internally defines a passage for a coolant fluid and the method comprises, after the step of electrically powering the coil 2 with a varying high-frequency electric signal, a step of making a coolant fluid circulate in the electrically conductive element 2 in order to reduce the temperature of the half-shells (1A,1B).

Also defined is a method for moulding hollow thermoplastic objects from thermoplastic material in the form of powder, granules or liquid.

The moulding method according to the invention comprises the following steps:
- providing a mould 1 having a first half-shell 1A and a second half-shell 1 B coupled to define a cavity 3 having the shape of the object to be moulded;
- placing at least one coil made of electrically conductive material in contact with the outside of at least one of the half-shells 1A,1B;
- introducing basic thermoplastic material, in powder or liquid form, in the cavity 3;
- electrically powering the coil with a varying high-frequency electric signal (preferably at a predetermined frequency) so as to heat at least one of the half-shells (1A, 1B) by induction and transmit heat to the basic thermoplastic material inside the cavity.
- driving the mould 1.

Preferably, the signal which powers the coil is a varying electrical signal whose amplitude is approximately 600 V.

Preferably, simultaneously with heating, the method comprises a step of driving the mould 1 in rotation simultaneously about a first axis X1 and a second axis X2 at right angles to each other.

It should be noted that the moulding method is a rotational moulding method.

It should be noted that the mould 1 and the machine 100 allow making hollow objects (containers of any kind) of any shape: in effect, it is sufficient for the cavity 3 to be shaped to fit the outer contours of the object to be made.

Advantageously, the mould 1 and the machine 100 allow hollow objects to be made extremely rapidly: indeed, induction heating is extremely rapid and allows reduced energy consumption.

Moreover, use of a hollow element 2 allows the mould to be heated and cooled by a single element: that translates as savings in costs and as constructional simplicity of the machine 100 as a whole.

## Claims

1. A mould for rotational moulding of hollow objects from basic thermoplastic material in the form of powder, granules or liquid, comprising:
- at least a first and a second half-shell (1A, 1B) of metallic material, coupled to define a cavity (3) having the shape of the object to be moulded;
- at least one electrically conductive element (2) arranged at said first and/or second half-shells (1A, 1B) to define a coil having respective ends for connection to a high frequency variable electrical power source suitable for, generating a magnetic field in said half-shells (1A, 1B) to heat them by electromagnetic induction, wherein the electrically conductive element (2) internally defines a passage for a cooling fluid,
**characterized in that** the conductive element (2) is in contact with said first and/or second half-shell and **in that** it comprises a dielectric layer (5) wrapped around the outside of the electrically conductive element (2) and a highly thermally conductive filling layer (6) interposed between a channel (7) and the dielectric layer (5).

2. The mould according to claim 1, wherein the first half-shell (1 A) and/or the second half-shell (1 B) comprises on its outside surface at least one channel (7) for housing the electrically conductive element (2).

3. The mould according to claim 2, wherein the channel (7) is open towards the outside of the half-shells (1A,1B).

4. The mould according any of the preceding claims, wherein the filling layer (6) comprises a silicone paste.

5. The mould according to any of the preceding claims wherein the dielectric layer (5) is a two-sided adhesive tape of plastic material with high dielectric rigidity.

6. The mould according to any of the preceding claims, wherein the electrically conductive element (2) is a tubular element.

7. A method for heating a mould for rotational moulding of hollow objects made of thermoplastic material, comprising the following steps:
- providing a rotational mould (1) having at least a first and a second rotary half-shell (1 A, 1B) coupled to define a cavity (3) having the shape of the object to be moulded;
- providing at least one electrically conductive element (2) arranged at the first and/or second half-shell (1 A, 1B), defining a coil and arranged to generate a magnetic field in said half-shells (1A, 1B), wherein the electrically conductive element (2) internally defines a passage for a cooling fluid;
- introducing basic thermoplastic material, in the form of powder, granules or liquid, in the cavity (3);
- electrically powering said coil with a variable electric signal at high frequency, thus heating the half-shells (1 A, 1B) by electromagnetic induction and transmitting heat to the thermoplastic material in the cavity (3),
**characterized in that** said variable electric signal is at high frequency and the conductive element (2) is in contact with said first and/or second half-shell,
and **in that** it comprises, before the step of electrically powering the coil with a varying high-frequency electric signal, a step of insulating the coil from the half-shells (1A,1B) with a dielectric layer 5 wrapped around the outside of the coil itself, wherein a highly thermally conductive filling layer (6) is interposed between a channel (7) and the dielectric layer (5).

8. The method according to claim 7, comprising a step of driving the mould (1) in rotation.

9. The method according to claim 8, wherein the step of driving the mould (1) in rotation comprises a step of driving the mould (1) simultaneously in rotation about a first axis (X1) and a second axis (X2) at right angles to each other.

10. The method according to any of the claims from 7 to 9, comprising at least one step of providing on the outside surface of the half-shells (1A,1B) at least one channel (7) for housing the coil.

11. The method according to any of the claims from 7 to 10, wherein the coil internally defines a passage for a coolant fluid and the method comprises a step of cooling by making a coolant fluid circulate in the electrically conductive element (2).

12. The method according to claim 11. wherein the step of cooling follows the step of heating by powering the coil with a varying high-frequency electric signal.

## Patentansprüche

1. Form zum Drehformen von hohlen Gegenständen aus einem thermoplastischen Basismaterial in Form von Pulver, Granulat oder Flüssigkeit, umfassend:
- mindestens eine erste und eine zweite Halbhülle (1A, 1B) aus Metallmaterial, gekoppelt, um einen Hohlraum (3) zu definieren, aufweisend die Form des zu formenden Gegenstands;
- mindestens ein elektrisch leitendes Element (2), angeordnet an der ersten und/oder der zweiten Halbhülle (1A, 1B), um eine Spule zu definieren, aufweisend jeweilige Enden zum Anschluss an eine hochfrequente Stromversorgungsquelle, geeignet, um ein Magnetfeld in den Halbhüllen (1A, 1B) zu erzeugen, um diese durch elektromagnetische Induktion zu erwärmen, wobei das elektrisch leitende Element (2) innenseitig einen Durchgang für ein Kühlmedium definiert,
**dadurch gekennzeichnet, dass** das leitende Element (2) in Kontakt mit der ersten und/oder der zweiten Halbhülle ist und dass es eine dielektrische Schicht (5) umfasst, die die Außenseite des elektrisch leitenden Elements (2) umhüllt, und eine hoch thermisch leitende Füllschicht (6), die zwischen einem Kanal (7) und der dielektrischen Schicht (5) eingesetzt ist.

2. Form nach Anspruch 1, wobei die erste Halbhülle (1A) und/oder die zweite Halbhülle (1B) an der äußeren Oberfläche mindestens einen Kanal (7) umfasst/umfassen, um das elektrisch leitende Element (2) unterzubringen.

3. Form nach Anspruch 2, wobei der Kanal (7) zur Außenseite der Halbhülle (1A, 1B) hin offen ist.

4. Form nach einem der vorhergehenden Ansprüche, wobei die Füllschicht (6) eine Silikonpaste umfasst.

5. Form nach einem der vorhergehenden Ansprüche, wobei die dielektrische Schicht (5) ein beidseitig klebendes Band aus Kunststoffmaterial mit hoher dielektrischer Steifigkeit ist.

6. Form nach einem der vorhergehenden Ansprüche, wobei das elektrisch leitende Element (2) ein rohrförmiges Element ist.

7. Verfahren zum Erwärmen einer Form zum Drehformen von hohlen Gegenständen, bestehend aus thermoplastischem Material, umfassend die folgenden Schritte:
- Bereitstellen einer Drehform (1), aufweisend mindestens eine erste und eine zweite sich drehende Halbhülle (1A, 1B), gekoppelt, um einen Hohlraum (3) zu definieren, aufweisend die Form des zu formenden Gegenstands;
- Bereitstellen von mindestens einem elektrisch leitenden Element (2), angeordnet an der ersten und/oder der zweiten Halbhülle (1A, 1B), definierend eine Spule und angeordnet, um ein Magnetfeld in den Halbhüllen (1A, 1B) zu erzeugen, wobei das elektrisch leitende Element (2) innenseitig einen Durchgang für ein Kühlmedium definiert;
- Einführen eines thermoplastischen Basismaterials in Form von Pulver, Granulat oder Flüssigkeit in den Hohlraum (3);
- elektrisches Speisen der Spule mit einem variablen elektrischen Signal bei hoher Frequenz, sodass die Halbhüllen (1A, 1B) durch elektromagnetische Induktion erwärmt werden, und Übertragen von Wärme auf das thermoplastische Material im Hohlraum (3),
**dadurch gekennzeichnet, dass** das variable elektrische Signal eine hohe Frequenz aufweist und das leitende Element (2) in Kontakt mit der ersten und/oder der zweiten Halbhülle ist
und dadurch, dass es vor dem Schritt des elektrischen Speisens der Spule mit einem variablen hochfrequenten elektrischen Signal einen Schritt zum Isolieren der Spule von den Halbhüllen (1A, 1B) mit einer dielektrischen Schicht (5) umfasst, die die Außenseite der Spule umhüllt, wobei eine hoch thermisch leitende Füllschicht (6) zwischen einem Kanal (7) und der dielektrischen Schicht (5) eingesetzt ist.

8. Verfahren nach Anspruch 7, umfassend einen Schritt zum Versetzen der Form (1) in Drehung.

9. Verfahren nach Anspruch 8, wobei der Schritt zum Versetzen der Form (1) in Drehung einen Schritt umfasst, um die Form (1) simultan in Drehung um eine erste Achse (X1) und eine zweite Achse (X2) im rechten Winkel zueinander zu versetzen.

10. Verfahren nach einem der Ansprüche 7 bis 9, umfassend mindestens einen Schritt zum Bereitstellen mindestens eines Kanals (7) zur Unterbringung der Spule an der Außenseite der Halbhüllen (1A, 1B).

11. Verfahren nach einem der Ansprüche 7 bis 10, wobei die Spule innenseitig einen Durchgang für ein Kühlmedium definiert und das Verfahren einen Schritt zum Kühlen umfasst, indem dafür gesorgt wird, dass das Kühlmedium im elektrisch leitenden Element (2) zirkuliert.

12. Verfahren nach Anspruch 11, wobei der Schritt zum Kühlen auf den Schritt zum Erwärmen durch die Versorgung der Spule mit einem variablen hochfrequenten elektrischen Signal folgt.

## Revendications

1. Moule pour moulage rotatif d'objets creux à partir d'un matériau thermoplastique sous forme de poudre, de granulés ou du liquide, comprenant :
- au moins une première et une deuxième demi-coque (1A, 1B) de matériau métallique, accouplées pour former une cavité (3) ayant la forme de l'objet à mouler ;
- au moins un élément électriquement conducteur (2) disposé au niveau des dites première et/ou deuxième demi-coque (1A, 1B) pour former une bobine ayant des extrémités respectives pour le raccordement à une source de puissance électrique à haute fréquence variable pour générer un champ magnétique dans lesdites demi-coques (1A, 1B) pour les réchauffer par induction électromagnétique, dans lequel l'élément électriquement conducteur (2) forme à l'intérieur un passage pour un liquide de refroidissement,
**caractérisé en ce que** l'élément conducteur (2) est au contact de ladite première et/ou deuxième demi-coque et **en ce qu'**il comprend une couche diélectrique (5) enroulée autour de l'extérieur de l'élément électriquement conducteur (2) et une couche de remplissage hautement thermoconductrice (6) interposée entre un canal (7) et la couche diélectrique (5).

2. Moule selon la revendication 1, dans lequel la première demi-coque (1A) et/ou la deuxième demi-coque (1B) comprend sur sa surface externe au moins un canal (7) pour loger l'élément électriquement conducteur (2).

3. Moule selon la revendication 2, dans lequel le canal (7) est ouvert en direction de l'extérieur des demi-coques (1A, 1B).

4. Moule selon l'une quelconque des revendications précédentes, dans lequel la couche de remplissage (6) comprend une pâte à base de silicone.

5. Moule selon l'une quelconque des revendications précédentes, dans lequel la couche diélectrique (5) est un ruban adhésif double face en plastique à haute rigidité diélectrique.

6. Moule selon l'une quelconque des revendications précédentes, dans lequel l'élément électriquement conducteur (2) est un élément tubulaire.

7. Procédé de chauffage d'un moule pour le moulage rotatif d'objets creux réalisé dans un matériau plastique, comprenant les étapes suivantes :
- fournir un moule rotatif (1) ayant au moins une première et une deuxième demi-coque rotative (1A, 1B) accouplées pour former une cavité (3) ayant la forme de l'objet à mouler ;
- fournir au moins un élément électriquement conducteur (2) disposé au niveau des dites première et/ou deuxième demi-coque (1A, 1B) pour former une bobine et disposé pour générer un champ magnétique dans lesdites demi-coques (1A, 1B) dans lequel l'élément électriquement conducteur (2) forme à l'intérieur un passage pour un liquide de refroidissement,
- introduire un matériau thermoplastique basique, sous forme de poudre, de granulés ou de liquide, dans la cavité (3) ;
- alimenter électriquement ladite bobine avec un signal électrique variable à haute fréquence, donc chauffant les demi-coques (1A, 1B) par induction électromagnétique et transmettant la chaleur au matériau thermoplastique dans la cavité (3), **caractérisé en ce que** ledit signal électrique variable est à haute fréquence et **en ce que** l'élément conducteur (2) est au contact des dites première et/ou deuxième demi-coque,
et **en ce qu'**il comprend, avant l'étape d'alimenter électriquement la bobine avec un signal électrique à haute fréquence variable, une étape d'isoler la bobine des demi-coques (1A, 1B) avec une couche diélectrique (5) enveloppée autour de l'extérieur de la bobine même, dans laquelle une couche de remplissage hautement thermoconductrice (6) est interposée entre un canal (7) et la couche diélectrique (5).

8. Procédé selon la revendication 7, comprenant une étape d'entraîner le moule (1) en rotation.

9. Procédé selon la revendication 8, dans lequel l'étape d'entraîner le moule (1) en rotation comprend une étape d'entraîner le moule (1) simultanément en rotation autour d'un premier axe (X1) et d'un deuxième axe (X2) à angle droit.

10. Procédé selon l'une des revendications de 7 à 9, comprenant au moins une étape de fournir à la surface externe des demi-coques (1A, 1B) au moins un canal (7) pour loger la bobine.

11. Procédé selon l'une des revendications de 7 à 10, dans lequel la bobine forme à l'intérieur un passage pour liquide de refroidissement et le procédé comprend une étape de refroidir en faisant circuler un liquide de refroidissement dans l'élément électriquement conducteur (2).

12. Procédé selon la revendication 11, dans lequel l'étape de refroidir suit l'étape de chauffer en mettant la bobine sous tension avec un signal électrique à haute fréquence variable.
